(19) Europäisches Patentamt

European Patent Office

Office européen des brevets

(11) **EP 1 193 717 B1**

(12) **FASCICULE DE BREVET EUROPEEN**

(45) Date de publication et mention
de la délivrance du brevet:
**21.06.2006 Bulletin 2006/25**

(51) Int Cl.:
***G21C 3/18*** *(2006.01)*   ***G21C 3/62*** *(2006.01)*

(21) Numéro de dépôt: **01402469.9**

(22) Date de dépôt: **26.09.2001**

(54) **Combustible nucléaire comprenant un poison consommable et son procédé de fabrication**

Kernbrennstoff mit abbrennbarem Gift und Verfahren zu seiner Herstellung

Nuclear fuel comprising a burable poison and method of manufacture therefor

(84) Etats contractants désignés:
**BE DE**

(30) Priorité: **27.09.2000 FR 0012285**

(43) Date de publication de la demande:
**03.04.2002 Bulletin 2002/14**

(73) Titulaire: **COMMISSARIAT A L'ENERGIE ATOMIQUE**
**75752 Paris Cédex 15 (FR)**

(72) Inventeurs:
• **Fourcade, Julien**
  **13115 Saint Paul lez Durance (FR)**
• **Mazoyer, Richard**
  **13100 Aix en Provence (FR)**
• **Papet, Philippe**
  **34980 Saint Gely du Fesc (FR)**

(74) Mandataire: **Audier, Philippe André et al**
**Brevalex**
**3, rue du Docteur Lancereaux**
**75008 Paris (FR)**

(56) Documents cités:
**EP-A- 0 418 578**   **WO-A-95/08827**
**US-A- 4 990 303**

**Description**

**Domaine technique**

La présente invention a pour objet un combustible nucléaire à base d'oxyde d'uranium comprenant un poison consommable et son procédé de fabrication sous forme de pastilles.

Des pastilles de combustible nucléaire de ce type sont utilisables dans des réacteurs nucléaires tels que des réacteurs à eau pressurisée.

**État de la technique antérieure**

Le combustible nucléaire généralement utilisé dans les réacteurs à eau pressurisée est le dioxyde d'uranium $UO_2$ enrichi à quelques pourcents en $^{235}$U (UOX). Ce combustible peut être utilisé seul ou être accompagné (dans la limite de 30 %) de combustible MOX qui est un oxyde mixte d'uranium et de plutonium $UO_2$-$PuO_2$ contenant du plutonium fissile $Pu^{239}$.

Le contrôle de la réactivité des coeurs de réacteurs est réalisé au moyen de bore dissous dans l'eau du circuit primaire et de poisons neutroniques consommables. Ces derniers sont des composés qui absorbent les neutrons et dont la cinétique de disparition est adaptée à la cinétique d'épuisement du combustible. Actuellement, on utilise comme poison consommable du gadolinium incorporé dans le combustible.

La limite de combustion actuelle, pour un combustible $UO_2$ de réacteur à eau pressurisée, est de 45 $GWjt^{-1}$. Afin d'améliorer la compétitivité de la filière nucléaire, il est envisagé d'augmenter ce taux de combustion au-delà de 60 $GWjt^{-1}$. Mais, cette évolution du fonctionnement des réacteurs nécessite des charges plus importantes en combustible MOX, et donc, un mode d'empoisonnement différent, adapté à la nouvelle cinétique d'épuisement de la matière fissile. Le bore possède des propriétés, vis-à-vis de l'irradiation neutronique et de la cinétique d'épuisement du MOX, qui en fait un poison idéal pour contrôler la réactivité du coeur en début de cycle. Sa concentration dans le caloporteur (eau du circuit primaire) ne pouvant pas, pour des raisons de solubilité, être augmentée, son incorporation en faible quantité dans le combustible est la seule solution alternative.

Cependant, jusqu'à présent toutes les tentatives d'incorporation de bore dans un combustible nucléaire à base d'oxyde ont échoué en raison de l'oxydation du bore en anhydride borique $B_2O_3$ volatil, dans ce type de combustible.

Le document US-A-3 320 176 [1] décrit l'addition d'un matériau fissile et d'un poison consommable à un matériau fertile pour former un combustible nucléaire céramique par un procédé sol-gel. Le procédé consiste à préparer une solution colloïdale des espèces à mélanger, à sécher la solution et à densifier le gel obtenu. Ce procédé repose sur des mécanismes de mélange peu connus et n'a pas donné lieu à la réalisation industrielle de pastilles de combustibles à base d'oxyde d'uranium contenant du bore.

Le document US-A-3 361 857 [2] décrit un procédé de préparation d'éléments combustibles en oxyde fissile contenant un poison consommable, dans lequel on mélange l'oxyde fissile avec le poison consommable et un liant organique pour préparer des pastilles par compression à froid, les pastilles étant ensuite soumises à un pré-frittage sous vide puis sous hydrogène, et à un frittage sous hydrogène à température élevée. Le préfrittage sous hydrogène à une température de 700°C a pour but de réduire le dioxyde d'uranium sur-stoechiométrique en $UO_{2,00}$ sans oxyder le bore qui est présent sous la forme de $ZrB_2$. Thermodynamiquement, on observe que les réactions d'oxydation du $ZrB_2$ sont :

$$ZrB_2 + 5/2\ O_2 \rightarrow ZrO_2 + B_2O_3$$

$$ZrB_2 + 8\ H_2O \rightarrow ZrO_2 + 2H_3BO_3 + 5\ H_2$$

$$ZrB_2 + 6\ H_2O \rightarrow ZrO_2 + HBO_2 + 5\ H_2$$

Ainsi, l'étape de pré-frittage devrait limiter l'oxydation du $ZrB_2$, mais ce procédé implique que cette oxydation ne se produise pas à 700°C. Or, l'oxydation du bore débute à 400°C dans l'air. L'inertie de $ZrB_2$ à 700°C reste donc à prouver.

Le document US-A-3 431 329 [3] décrit lui-aussi la préparation d'un matériau combustible contenant un poison consommable constitué par du diborure de zirconium, et il évite l'oxydation du bore en ajoutant au combustible de l'hydrure d'uranium en quantité suffisante pour réagir avec l'oxygène hyperstochioemétrique présent dans le dioxyde d'uranium commercial.

Le document US-A-3 501 411 [4] envisage une autre méthode d'incorporation d'un poison consommable tel que Gd, Sm, B et Hf, dans un combustible nucléaire, par imprégnation de microsphères du combustible avec une solution d'un sel du poison consommable.

Le document US-A-4 997 596 [5] illustre une composition de combustible nucléaire fissile contenant un poison consommable choisi parmi le nitrure de bore, l'oxyde de bore et le siliciure de bore, présents, à des teneurs massiques de 20 à 500 ppm par rapport à l'oxyde fissile.

Ainsi, de nombreux procédés ont été envisagés pour incorporer du bore dans un combustible à base d'oxyde d'uranium, mais aucun de ces procédés n'a trouvé de développement industriel.

**Exposé de l'invention**

La présente invention a précisément pour objet un combustible nucléaire à base d'oxyde d'uranium incorporant un poison consommable à base de bore, et un procédé pour sa fabrication, qui permet d'éviter l'oxydation du bore en $B_2O_3$ volatil.

Selon l'invention, le combustible nucléaire à base d'oxyde d'uranium comprenant un poison consommable constitué par du bore, se caractérise en ce que le bore est dispersé dans le combustible sous forme de borure métallique, par exemple de métal de transition, et de verre contenant du bore.

Grâce à l'association d'un verre contenant du bore avec un borure tel que le borure de titane $TiB_2$, le borure de zirconium $ZrB_2$ et le borure d'hafnium $HfB_2$, on forme autour de ce borure une phase vitreuse protégeant le borure de l'oxydation. De plus, le verre favorise la répartition de la phase neutrophage aux joints de grains et confère à la pastille une certaine plasticité à haute température, ce qui est un avantage dans les conditions d'utilisation en réacteur.

Selon l'invention, le borure est enrichi en isotope $B^{10}$, ce qui permet d'introduire la quantité de bore neutrophage souhaitée.

Le bon comportement sous irradiation des diborures de métaux de transition tels que le borure de titane, le borure de zirconium et le borure d'hafnium, rend ces composés particulièrement intéressants pour une incorporation dans le combustible nucléaire.

En effet, sous irradiation, le relâchement d'hélium gazeux dû à la capture d'un neutron par le bore des diborures, selon le schéma suivant :

$$B^{10} + n^1 \rightarrow Li^7 + He^4$$

ne semble pas provoquer leur rupture, contrairement à ce qui se passe avec $B_4C$ par exemple. Cette bonne résistance sous irradiation, associée à une proportion de bore importante fait de ces borures des additifs de choix.

De préférence, on utilise comme borure le diborure de titane $TiB_2$.

Selon l'invention, le verre contenant du bore que l'on associe au diborure, est choisi de façon à présenter des caractéristiques thermomécaniques compatibles avec le procédé de fabrication des pastilles de combustible, et l'utilisation dans un réacteur nucléaire. Il convient en particulier que le verre présente une viscosité appropriée pour la réalisation des pastilles de combustible nucléaire, ainsi qu'une bonne stabilité en réacteur nucléaire.

Etant donné que l'oxydation des diborures débute vers 800°C et la volatilisation de $B_2O_3$ vers 1000°C, la viscosité du verre doit être suffisamment faible à partir de 800°C pour permettre une protection efficace du bore.

Généralement, la fabrication de pastilles combustibles comprend un frittage qui ferme la porosité vers 900 - 1000°C. Aussi, le verre doit posséder une tenue suffisante avant 1000°C afin d'éviter le ressuage pendant la densification de la pastille.

Enfin, lors du fonctionnement en réacteur, une pastille subit de fortes variations de température, le coeur des pastilles pouvant atteindre 1300°C. La phase vitreuse contenue dans la céramique doit résister à de telles températures et si possible améliorer l'IPG (Interaction Pastille Gaine) en augmentant la plasticité des pastilles.

De préférence, le verre contenant du bore est un borosilicate ayant un taux massique de $B_2O_3$ de 10 à 20 %. On peut utiliser en particulier un borosilicate d'aluminium, de sodium et/ou de potassium, qui présente une température de transition vitreuse Tg de 400 à 600°C, et qui résiste à des températures allant jusqu'à 1300°C, qui sont les températures maximales atteintes dans les pastilles de combustible au cours du fonctionnement d'un réacteur nucléaire.

A titre d'exemple de verre boré susceptible d'être utilisé, on peut citer les verres de type Pyrex® ou Duran® qui sont des borosilicates contenant 81 % de $SiO_2$, 13 % de $B_2O_3$, 4 % au total de d'oxydes alcalins et 2 % de $Al_2O_3$. Ces verres présentent une température de transition vitreuse Tg de 525°C et une température de travail Tw de 1260°C.

La viscosité de ces verres diminue avec la température à partir de 525°C environ, ce qui rend possible la protection du diborure vers 800-900°C. De plus, la tenue mécanique du verre est correcte au moins jusqu'à 1260°C, ce qui permet d'éviter le ressuage. Quant au comportement en réacteur, les températures Tg et Tw semblent parfaitement en accord avec le comportement en régime permanent. Le verre n'a presque pas évolué vers 700°C et dans le cas d'une transition de puissance (1300°C environ), le verre ne subirait aucun dommage important.

Selon l'invention, les quantités de borure et de verre contenant du bore incorporées dans le combustible sont calculées pour obtenir une teneur massique en bore de 100 à 1000 ppm par rapport au combustible nucléaire à base d'oxyde d'uranium.

Dans l'invention, le fait d'associer un verre au borure cristallisé permet, d'une part, de limiter l'oxydation du borure et, d'autre part, de piéger dans le réseau vitreux l'oxyde de bore $B_2O_3$ liquide éventuellement formé.

En effet, on a pu constater par l'analyse thermogravimétrique que l'ajout de verre limite l'oxydation des composés cristallisés et particulièrement $TiB_2$. Lors de la montée en température, la viscosité du verre diminue, il peut alors s'écouler légèrement et enrober les particules cristallisées qui l'entourent. La diffusion de l'oxygène est ralentie par le verre et l'oxydation des particules cristallisées est limitée. De plus, le verre s'il est suffisamment fluide, peut capturer une partie du $B_2O_3$ liquide formé, avant que celui-ci ne se vaporise. Le bore est alors maintenu dans la céramique et au refroidissement, le $B_2O_3$ s'intègre dans le réseau vitreux. Cette propriété du verre permet de conserver le bore mais surtout évite l'apparition de contraintes dans la pastille, induites par une proportion trop importante de $B_2O_3$ gazeux.

L'invention a également pour objet un procédé de fabrication de pastilles de combustible nucléaire répondant aux caractéristiques précitées.

Ce procédé comprend les étapes suivantes :

a) préparer un mélange de poudres du combustible nucléaire, du borure métallique et du verre contenant du bore ;

b) mettre le mélange sous forme de pastilles crues par compression à froid ;

c) fritter les pastilles crues sous gaz faiblement oxydant à une température de 1200 à 1300°C ; et

d) soumettre les pastilles frittées à un traitement de réduction sous hydrogène à une température de 800 à 1000°C.

Généralement, l'étape a) de mélange de poudres est réalisé dans un broyeur, en phase liquide, par exemple dans un alcool. Tous les constituants utilisés sont à l'état de poudre, ayant de préférence une granulométrie inférieure à 50 $\mu$m.

Pour obtenir un mélange homogène, la masse d'alcool utilisée doit être égale à la masse de poudre. On a ainsi un mélange proche de la suspension qui permet une meilleure homogénéité dans la poudre finale. On peut réaliser cette étape de mélange en introduisant séparément dans le broyeur tous les constituants, c'est-à-dire la poudre de combustible nucléaire, la poudre de borure et la poudre de verre. On peut aussi réaliser cette étape de mélange, en mélangeant tout d'abord les poudres de borure et de verre, par exemple dans un broyeur planétaire en phase liquide alcoolique, et en ajoutant ensuite la poudre de combustible nucléaire dans le broyeur.

Les proportions de poudre de borure et de poudre de verre utilisées doivent être ajustées de façon à ce que le composé cristallisé (borure) introduise la quantité désirée de bore, par exemple 500 ppm, et que le composé vitreux soit en quantité suffisante pour enrober ce dernier.

Dans ces conditions, le mélange peut être réalisé avec 1/3 en volume de diborure cristallisé et 2/3 en volume de composé vitreux.

Après l'opération de mélange dans le broyeur planétaire en phase alcoolique, on sèche le mélange et on désagrège la poudre par tamisage (400 $\mu$m par exemple). La poudre obtenue est homogène en additifs cristallisés et vitreux.

On met alors le mélange sous forme de pastilles crues par compression à froid de façon à obtenir des pastilles convenant pour les réacteurs à eau pressurisée, présentant par exemple une hauteur de 10 mm et un diamètre de 10 mm. La technique de pressage est celle utilisée habituellement pour la fabrication de pastilles combustibles pour réacteur nucléaire à eau pressurisée, soit la technique de pressage uniaxiale sous une pression de 400 à 600 MPa.

On procède ensuite au frittage des pastilles crues dans des conditions favorisant le maintien de bore dans la céramique et évitant l'oxydation du composé borure en oxyde métallique et en oxyde de bore liquide vers 800°C, puis la volatilisation de ce dernier vers 1000°C.

Dans ce but, on réalise le frittage à une température relativement basse, par exemple à 1250-1300°C, sous atmosphère inerte, par exemple d'argon. Ainsi, on limite l'oxydation du diborure en oxyde $B_2O_3$. Par ailleurs, comme la porosité ouverte de la céramique se ferme avant 1000°C, le bore éventuellement oxydé sous forme de $B_2O_3$ est maintenu dans la pastille. La densification peut ensuite se poursuivre au-delà de 1000°C sans risque de perte de bore.

Ainsi, le frittage à basse température empêche la volatilisation de $B_2O_3$ gazeux à l'extérieur de la pastille, mais parallèlement il est important de limiter la formation de cette espèce volatile.

En effet, si une trop grande quantité de $B_2O_3$ liquide est formée par l'oxydation du diborure vers 800°C, la vaporisation de ce $B_2O_3$ dans la porosité, vers 1000°C, risque de provoquer sa rupture. Afin d'éviter l'endommagement des pastilles, il est important de limiter la contrainte appliquée par le $B_2O_3$ gazeux. Il faut donc prévenir la formation de $B_2O_3$ liquide par l'oxydation du bore.

L'utilisation d'un frittage dans une atmosphère faiblement oxydante, argon par exemple, limite la présence d'oxygène et évite une oxydation excessive du bore.

Le frittage basse température dans une atmosphère neutre permet de stabiliser le bore en limitant son oxydation et en empêchant sa volatilisation.

D'autres caractéristiques et avantages de l'invention apparaîtront mieux à la lecture de la description qui suit, d'exemples de réalisation donnés bien entendu à titre illustratif et non limitatif, en référence aux dessins annexés.

**Brève description des dessins**

La figure 1 est un diagramme illustrant l'évolution de la réaction d'oxydation du $TiB_2$ sous atmosphère de $CO_2$ en fonction de la température, dans le cas de $TiB_2$ seul et de $TiB_2$ associé à du verre.

La figure 2 est un schéma illustrant la mise en oeuvre du procédé de fabrication de pastilles de l'invention.

La figure 3 est un schéma représentant une variante de réalisation du procédé de la figure 2.

La figure 4 est un diagramme illustrant l'analyse dilatométrique sous atmosphère d'argon d'une pastille de $UO_2$ conforme à l'invention.

**Exposé détaillé des modes de réalisation**

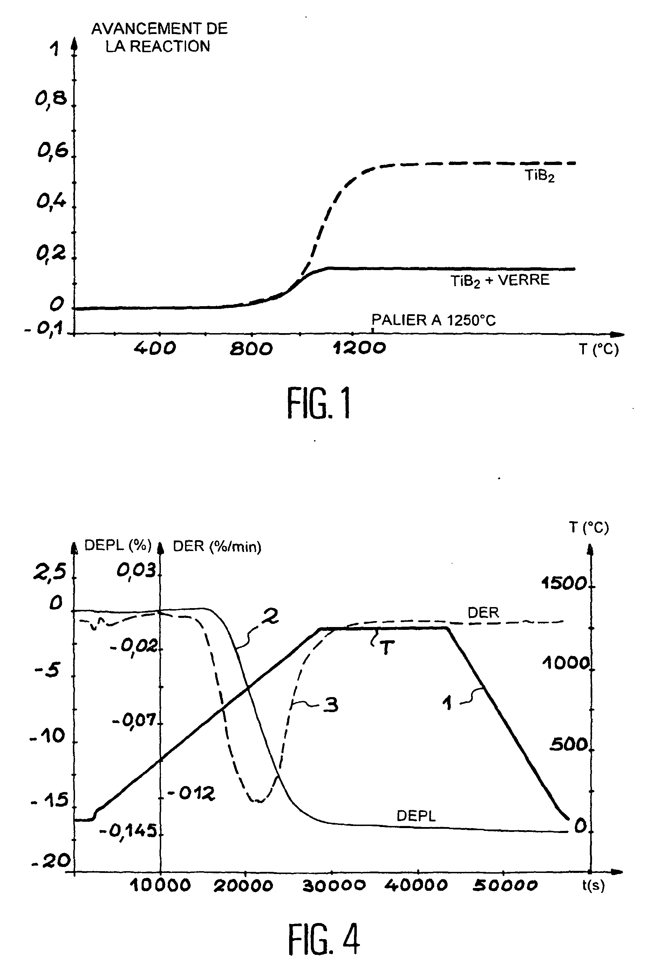

Sur la figure 1, on a illustré l'effet de l'addition de verre sur l'oxydation de $TiB_2$.

Cette figure correspond à une analyse thermogravimétrique sous atmosphère de $CO_2$, de $TiB_2$ seul ou de $TiB_2$ avec du verre Duran®. Elle illustre l'avancement de la réaction d'oxydation en fonction de la température qui varie de la température ambiante à 1250°C, avec un palier de 2 heures à cette température.

Le mélange de $TiB_2$ et de verre est effectué directement dans un creuset. Les proportions de chacun des constituants du mélange sont telles que le verre est en quantité suffisante pour enrober la totalité du composé cristallisé $TiB_2$, au cours de son passage en phase liquide (diborure/verre $\approx$ 35 % en masse).

Les courbes thermogravimétriques données sur la figure montrent clairement l'effet protecteur du verre.

Le verre Duran® commence à être plus ou moins fluide vers 1000°C. Il peut donc s'écouler librement entre les particules solides de diborure et ainsi, les enrober. Le verre forme alors une couche de protection entre le diborure et l'atmosphère de la thermobalance. L'influence de l'augmentation de la pression d'oxygène à partir de 950°C est donc légèrement limitée, même si elle reste présente.

Ainsi, les analyses thermogravimétriques permettent d'attribuer au verre un rôle protecteur vis-à-vis de l'oxydation du diborure et confirme l'intérêt de l'ajout de verre conformément à l'invention.

On décrit ci-après le procédé de fabrication de pastilles de combustible $UO_2$ incorporant du $TiB_2$ et du verre contenant du bore.

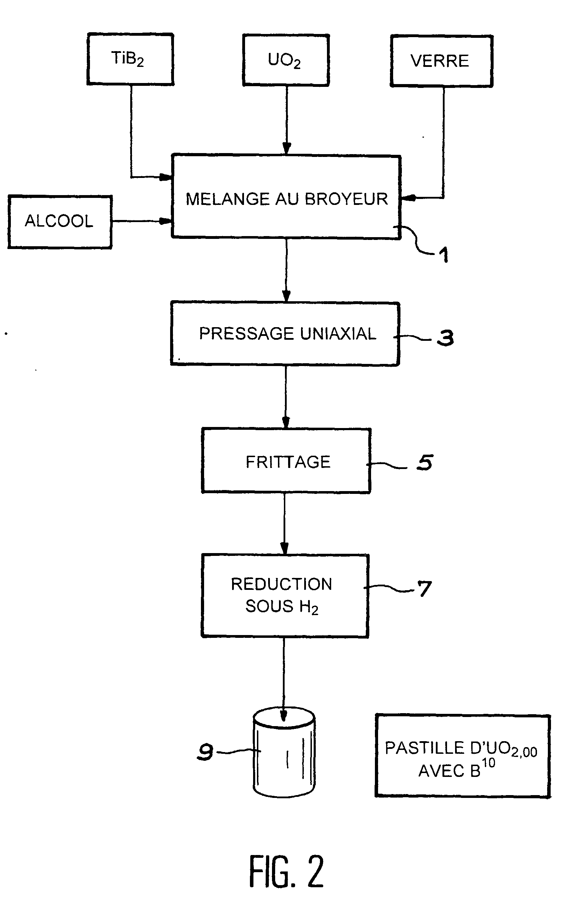

La figure 2 illustre schématiquement les différentes étapes de ce procédé de fabrication de pastilles de $UO_2$. Sur cette figure, on voit la première étape 1 qui consiste à mélanger au broyeur planétaire les poudres de combustible nucléaire ($UO_2$), de borure de métal de transition ($TiB_2$) et de verre, dans une phase liquide constituée par un alcool. Après l'étape 1 de mélange, on prépare les pastilles crues par compression à froid comme représenté sur la figure 1 en 3. Les pastilles crues obtenues sont ensuite soumises à l'étape de frittage représentée en 5, puis à une réduction sous hydrogène représentée en 7. On obtient ainsi des pastilles 9 de $UO_{2,00}$ contenant du bore-10 dispersé dans les pastilles.

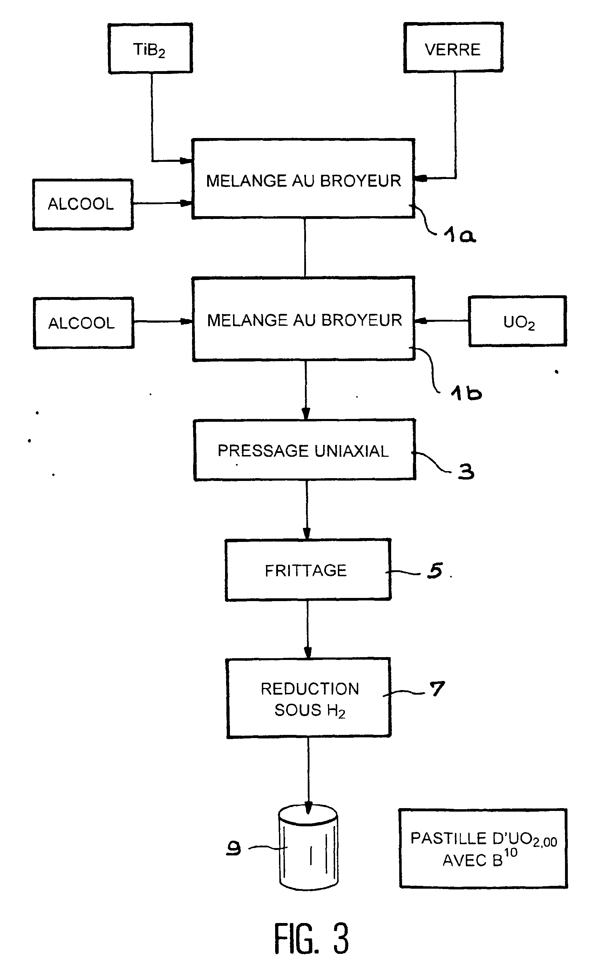

La figure 3 illustre une variante de réalisation du procédé de fabrication de la figure 2, dans lequel le mélange des poudres de départ s'effectue en deux stades, soit un premier stade 1a de mélange des poudres de $TiB_2$ et de verre dans une phase liquide constituée par un alcool, suivie d'un second stade 1b de mélange avec la poudre de $UO_2$, toujours dans une phase liquide constituée par un alcool. Les étapes suivantes sont identiques à celles représentées sur la figure 2.

On décrit ci-après un exemple de réalisation de pastilles de combustible $UO_2$ contenant du bore par mise en oeuvre du procédé représenté sur la figure 2.

Pour préparer le mélange, on part d'une poudre de $TiB_2$, d'une poudre de verre et d'une poudre de $UO_2$ présentant les caractéristiques suivantes.

| $TiB_2$ | |
|---|---|
| Teneur en bore | 31,4 % |
| Masse molaire | 69,5 g/mol |
| Masse volumique | 4,5 g/cm³ |

Suite de tableau

| TiB$_2$ | |
|---|---|
| Maille cristalline | hexagonale |

| Verre « Duran » | | | | |
|---|---|---|---|---|
| Coefficient de dilatation | 3,3.10$^{-6}$ K$^{-1}$ | | | |
| Température de transition vitreuse Tg | 525°C | | | |
| Température de travail du verre Tw | 1260°C | | | |
| Masse volumique | 2,23 g/cm$^3$ | | | |
| Module d'élasticité | 64.10$^3$ N/mm$^2$ | | | |
| Module de poisson | 0,20 | | | |
| Indice de réfraction ($\lambda$ = 587,6 nm) | 1,473 | | | |
| Composition massique | SiO$_2$ | B$_2$O$_3$ | Na$_2$O + K$_2$O | Al$_2$O$_3$ |
| | 81 % | 13 % | 4% | 2% |

| UO$_2$ | |
|---|---|
| Masse volumique | 10,8 g/cm$^3$ |
| Masse molaire | 270 g/mol |
| Rapport O/U | 2,16 |

On mélange 100,0 g de la poudre de UO$_2$ avec 139,6 mg de poudre de TiB$_2$ et 136,7 mg de poudre de verre Duran, dans un broyeur planétaire à billes en carbure de tungstène, en effectuant le mélange en milieu alcoolique avec 50 à 100 cm$^3$ d'éthanol pendant 30 minutes. On évapore ensuite l'alcool à l'air et on récupère une poudre de UO$_2$ contenant 495 ppm de bore.

L'ajout des additifs (TiB$_2$ et verre) ne modifie pas les caractéristiques physiques, en particulier la compressibilité de la poudre. On la soumet ensuite à une compression uniaxiale à 400 MPa dans une presse dont la matrice est lubrifiée avec du stéarate de zinc, pour élaborer des pastilles d'une hauteur de 10 mm et d'un diamètre de 10 mm.

On détermine le diamètre moyen Dm, la hauteur moyenne Hm, la masse M, la masse volumique Mv des pastilles. Les résultats obtenus sur 3 pastilles du lot sont donnés dans le tableau 1. Les pastilles ont des caractéristiques identiques à celles de pastilles de UO$_2$ classiques sans addition de bore.

On soumet les pastilles crues à un frittage à 1250°C, pendant 4 heures, dans un flux d'argon de 30 litres/heure.

L'analyse dilatométrique des pastilles effectuée lors du frittage montre que les pastilles sont denses et que leur porosité est faible.

La figure 4 illustre cette analyse dilatométrique, soit l'évolution de la température T (courbe 1), l'évolution du déplacement DEPL (en %) (courbe 2), et l'évolution de la dérivée du DEPL DER (en % par minute) (courbe 3) en fonction du temps (en secondes).

Les courbes dilatométriques font apparaître un début de densification à 700°C. Cette densification s'accélère fortement jusqu'à 850-900°C. A cette température la cinétique est maximale et on est à 5 % de retrait. Au-delà de 900°C, la courbe de densification progresse plus lentement jusqu'à atteindre 17,5 % de retrait pendant le palier à 1250°C. La densification est alors considérée comme terminée.

Après l'étape de frittage, on soumet les pastilles à un traitement de réduction sous atmosphère d'hydrogène. Ce traitement est effectué à 900°C pendant 4 heures dans un flux d'hydrogène. La densification des pastilles obtenue lors du frittage précédent est suffisante pour éviter une volatilisation du bore. En effet, la réduction de UO$_2$ libère de l'oxygène dans les pastilles à partir de 500°C. L'oxygène libéré peut commencer à oxyder TiB$_2$ vers 800°C, mais les pastilles sont suffisamment denses pour conserver le B$_2$O$_3$ formé.

On contrôle ensuite les dimensions, la masse et la masse volumique des pastilles frittées et traitées thermiquement. Les résultats obtenus sur 3 pastilles du lot sont donnés dans le tableau 2.

Les résultats obtenus sont conformes aux caractéristiques des pastilles de combustibles UO$_2$, ne comportant pas d'ajout de poison consommable.

On effectue également un dosage chimique du bore dans les pastilles. Celui-ci est réalisé tout d'abord sur une pastille crue et sur trois pastilles frittées et réduites. Le dosage est effectué par la méthode ICP/MS (Inductively Coupled Plasma/Mass Spectrometry) après une dissolution des pastilles en milieu acide à chaud. Les résultats obtenus sont les suivants :

| Résultats du dosage de bore | | Variations | | Ecart type relatif |
|---|---|---|---|---|
| Quantité de bore visée dans le mélange | 495 ppm | | | |
| Quantité de bore mesurée dans le comprimé | 440 ppm | 55 ppm | 11 % | |
| Quantité de bore mesurée dans les pastilles | 450 ppm | 45 ppm | 9% | 1,3% |
| | 440 ppm | 55 ppm | 11 % | |
| | 450 ppm | 45 ppm | 9% | |

Les caractéristiques finales des pastilles élaborées sont les suivantes :

| | | Remarques |
|---|---|---|
| Masse volumique | 10,5 g/cm$^3$ | 96 % de la densité théorique |
| Porosité | Fermée | 4% | Les additifs doublent la porosité fermée |
| | Ouverte | < 0,2 % | Les additifs ne modifient pas la porosité ouverte |
| Taille de grains | 13-14 $\mu$m | Les additifs doublent la taille de grain |
| Quantité de bore | 440-450 ppm | La perte de bore est inférieure à 10 % |

On remarque ainsi que l'utilisation d'un verre associé aux diborures permet, après densification, des pastilles de UO$_2$ de conserver la quantité de bore initialement introduite à 10 % près.

La technique décrite ci-dessus qui consiste à incorporer une quantité donnée de bore, de l'ordre de 500 ppm, à l'aide d'un additif cristallisé, TiB$_2$ par exemple, et d'un additif vitreux, un borosilicate par exemple, permet d'obtenir, après un frittage à basse température (1300°C pendant 4 heures), sous une atmosphère neutre (argon) et une réduction sous hydrogène (900°C pendant 4 heures), des pastilles de combustible nucléaire contenant un poison neutronique, présentant des caractéristiques analogues à celles des pastilles de UO$_2$ utilisées actuellement.

Bien que la description ci-dessus illustre la fabrication de pastilles de UO$_2$, il va de soi que l'on peut appliquer la même technique pour préparer des pastilles MOX (UO$_2$-PuO$_2$) contenant du bore.

**Références citées**

[1] : US-A-3 320 176
[2] : US-A-3 361 857
[3] : US-A-3 431 329
[4] : US-A-3 501 411
[5] : US-A-4 997 596

**Tableau 1**

| Pastille crue | Dm (mm) | Hm (mm) | M (g) | Mv. (g/cm$^3$) | Mv. (% Mv.th) |
|---|---|---|---|---|---|
| 1 | 10,106 | 12,142 | 5,7880 | 5,943 | 54,22 |
| 2 | 10,106 | 11,932 | 5,6690 | 5,923 | 54,04 |
| 3 | 10,106 | 11,777 | 5,6030 | 5,931 | 54,12 |
| moyenne | 10,106 | 11,950 | 5,6867 | 5,932 | 54,127 |

Suite de tableau

| Pastille crue | Dm (mm) | Hm (mm) | M (g) | Mv. (g/cm$^3$) | Mv. (% Mv.th) |
|---|---|---|---|---|---|
| écart-type | 0,000 | 0,183 | 0,0938 | 0,010 | 0,091 |

**Tableau 2**

| Pastille frittée | Dm (mm) | Hm (mm) | M (g) | Mv. (g/cm$^3$) | Mv. (% Mv.th) |
|---|---|---|---|---|---|
| 1 | 8,283 | 9,996 | 5,6120 | 10,419 | 95,06 |
| 2 | 8,297 | 10,160 | 5,7310 | 10,432 | 95,18 |
| 3 | 8,285 | 9,839 | 9,839 | 10,457 | 95,41 |
| moyenne | 8,289 | 9,998 | 9,998 | 10,436 | 95,220 |
| écart-type | 0,008 | 0,161 | 0,0933 | 0,019 | 0,176 |

**Revendications**

1.  Combustible nucléaire à base d'oxyde d'uranium comprenant un poison consommable constitué par du bore, **caractérisé en ce que** le bore est dispersé dans le combustible sous forme de borure métallique et de verre contenant du bore.

2.  Combustible nucléaire selon la revendication 1, dans lequel le borure est choisi dans le groupe formé du borure de titane $TiB_2$, du borure de zirconium $ZrB_2$ et du borure d'hafnium $HfB_2$.

3.  Combustible nucléaire selon la revendication 1, dans lequel le borure est le borure de titane $TiB_2$.

4.  Combustible selon l'une quelconque des revendications 1 à 3, dans lequel le borure est enrichi en $B^{10}$.

5.  Combustible nucléaire selon l'une quelconque des revendications 1 à 4, dans lequel le verre contenant du bore est un borosilicate ayant un taux massique de $B_2O_3$ de 10 à 20 %.

6.  Combustible nucléaire selon l'une quelconque des revendications 1 à 4, dans lequel le verre est un borosilicate d'aluminium, de sodium et/ou de potassium, résistant à des températures allant jusqu'à 1300°C et présentant une température de transition vitreuse de 400 à 600°C.

7.  Combustible nucléaire selon l'une quelconque des revendications 1 à 5, dans lequel le verre comprend 81 % de $SiO_2$, 13 % de $B_2O_3$, 4 % au total d'oxyde alcalins et 2 % de $Al_2O_3$.

8.  Combustible nucléaire selon l'une quelconque des revendications 1 à 7, dans lequel la teneur massique en bore est de 100 à 1000 ppm.

9.  Combustible nucléaire selon l'une quelconque des revendications 1 à 8, dans lequel le combustible est un oxyde mixte d'uranium et de plutonium $UO_2$-$PuO_2$.

10. Combustible nucléaire selon l'une quelconque des revendications 1 à 8, dans lequel le combustible est $UO_2$.

11. Procédé de fabrication de pastilles de combustible nucléaire selon l'une quelconque des revendications 1 à 10, qui comprend les étapes suivantes :

    a) préparer un mélange de poudres du combustible nucléaire, du borure métallique et du verre contenant du bore ;
    b) mettre le mélange sous forme de pastilles crues par compression à froid ;
    c) fritter les pastilles crues sous gaz faiblement oxydant à une température de 1200 à 1300°C ; et
    d) soumettre les pastilles fittées à un traitement de réduction sous hydrogène à une température de 800 à 1000°C.

12. Procédé selon la revendication 11, dans lequel on mélange tout d'abord les poudres de borure et de verre, et on poursuit le mélange après avoir ajouté la poudre de combustible nucléaire.

**13.** Procédé selon la revendication 11, dans lequel la compression à froid est effectuée par pressage uniaxial sous une pression de 400 à 600 MPa.

**14.** Procédé selon la revendication 11, dans lequel dans l'étape c), l'atmosphère gazeuse est de l'argon.

**Claims**

**1.** Uranium oxide-based nuclear fuel comprising a burnable poison constituted by boron, **characterized in that** the boron is dispersed in the fuel in the form of metal boride and boron-containing glass.

**2.** Nuclear fuel according to claim 1, wherein the boride is chosen from within the group formed by titanium boride $TiB_2$, zirconium boride ZrB2 and hafnium boride $HfB_2$.

**3.** Nuclear fuel according to claim 1, wherein the boride is titanium boride TiB2.

**4.** Fuel according to any one of the claims 1 to 3, wherein the boride is $B^{10}$ enriched.

**5.** Nuclear fuel according to any one of the claims 1 to 4, wherein the glass containing the boron is a borosilicate having a 10 to 20% weight proportion of $B_2O_3$.

**6.** Nuclear fuel according to any one of the claims 1 to 4, wherein the glass is an aluminium, sodium and/or potassium borosilicate able to resist temperatures up to 1300°C and having a glass transition point of 400 to 600°C.

**7.** Nuclear fuel according to any one of the claims 1 to 5, wherein the glass comprises 81% $SiO_2$, 13% $B_2O_3$, 4% in all of alkaline oxide and 2% $Al_2O_3$.

**8.** Nuclear fuel according to any one of the claims 1 to 7, wherein the boron weight content is 100 to 1000 ppm.

**9.** Nuclear fuel according to any one of the claims 1 to 8, wherein the fuel is a mixed uranium and plutonium oxide $UO_2$-$PuO_2$.

**10.** Nuclear fuel according to any one of the claims 1 to 8, wherein the fuel is $UO_2$.

**11.** Method for the manufacture of nuclear fuel pellets according to any one of the claims 1 to 10 and comprising the following stages:

a) preparing a mixture of powders of the nuclear fuel, metal boride and boron-containing glass,
b) bringing the mixture into the form of crude pellets by cold compression,
c) sintering the crude pellets under a weakly oxidizing gas at a temperature of 1200 to 1300°C, and
d) subjecting the sintered pellets to a reduction treatment under hydrogen at a temperature of 800 to 1000°C.

**12.** Method according to claim 11, wherein firstly the boride and glass powders are mixed and mixing is then continued after adding the nuclear fuel powder.

**13.** Method according to claim 11, wherein cold compression takes place by uniaxial pressing under a pressure of 400 to 600 MPa.

**14.** Method according to claim 11, wherein in stage c) the gaseous atmosphere is argon.

**Patentansprüche**

**1.** Nuklearer Brennstoff auf Basis von Uranoxid, der ein abbrennbares Reaktorgift enthält, das aus Bor besteht, **dadurch gekennzeichnet, dass** das Bor in dem Brennstoff in Form von Metallborid und Bor enthaltendem Glas dispergiert ist.

**2.** Nuklearer Brennstoff nach Anspruch 1, in dem das Borid ausgewählt ist aus der Gruppe, die besteht aus Titanborid $TiB_2$, Zirkoniumborid $ZrB_2$ und Hafniumborid $HfB_2$.

**3.** Nuklearer Brennstoff nach Anspruch 1, in dem das Borid das Titanborid $TiB_2$ ist.

**4.** Nuklearer Brennstoff nach einem der Ansprüche 1 bis 3, in dem das Borid an $B^{10}$ angereichert ist.

**5.** Nuklearer Brennstoff nach einem der Ansprüche 1 bis 4, in dem das Bor enthaltende Glas ein Borsilicat mit einem Gehalt an $B_2O_3$ von 10 bis 20 Massenprozent ist.

**6.** Nuklearer Brennstoff nach einem der Ansprüche 1 bis 4, in dem das Glas ein Borsilicat von Aluminium, Natrium und/oder Kalium ist, das gegen Temperaturen bis zu 1300 °C beständig ist und eine Glasumwandlungstemperatur von 400 bis 600 °C aufweist.

**7.** Nuklearer Brennstoff nach einem der Ansprüche 1 bis 5, in dem das Glas 81 % $SiO_2$, 13 % $B_2O_3$, 4 % Gesamtalkalioxiden und 2 % $Al_2O_3$ umfasst.

**8.** Nuklearer Brennstoff nach einem der Ansprüche 1 bis 7, in dem der Massengehalt an Bor 100 bis 1000 ppm beträgt.

**9.** Nuklearer Brennstoff nach einem der Ansprüche 1 bis 8, bei dem es sich um ein Uran/Plutonium-Mischoxid $UO_2$-$PuO_2$ handelt.

**10.** Nuklearer Brennstoff nach einem der Ansprüche 1 bis 8, bei dem es sich um $UO_2$ handelt.

**11.** Verfahren zur Herstellung von nuklearen Brennstofftabletten nach einem der Ansprüche 1 bis 10, das die folgenden Stufen umfasst:

a) Herstellung einer pulverförmigen Mischung von nuklearem Brennstoff, Metallborid und Bor enthaltendem Glas;
b) Überführen der Mischung in rohe Brennstofftabletten durch Kaltpressen;
c) Sintern der rohen Tabletten unter einem schwach oxidierenden Gas bei einer Temperatur von 1200 bis 1300 °C; und
d) Durchführung einer Reduktionsbehandlung unter Wasserstoff bei einer Temperatur von 800 bis 1000 °C mit den gesinterten Tabletten.

**12.** Verfahren nach Anspruch 11, bei dem man zunächst die Borid- und Glaspulver miteinander mischt und das Mischen fortsetzt, nachdem das Pulver aus nuklearem Brennstoff zugegeben worden ist.

**13.** Verfahren nach Anspruch 11, in dem das Kaltpressen durch uniaxiales Pressen unter einem Druck von 400 bis 600 MPa durchgeführt wird.

**14.** Verfahren nach Anspruch 11, bei dem die in der Stufe (c) verwendete Gasatmosphäre Argon ist.

FIG. 1

FIG. 4

FIG. 2

| TiB₂ | | VERRE |
|---|---|---|

ALCOOL → MELANGE AU BROYEUR  1a

ALCOOL → MELANGE AU BROYEUR ← UO₂  1b

PRESSAGE UNIAXIAL  3

FRITTAGE  5

REDUCTION SOUS H₂  7

9

PASTILLE D'UO₂,₀₀ AVEC B¹⁰

FIG. 3